# EUROPÄISCHE PATENTSCHRIFT

(11) **EP 2 460 745 B1**
(45) Veröffentlichungstag und Bekanntmachung des Hinweises auf die Patenterteilung: **13.11.2013**
(21) Anmeldenummer: 11450122.4
(22) Anmeldetag: 15.09.2011
(51) Int. Cl.: B65G 21/04, B65G 21/22

(54) **Förderanlage zum Transport von Schüttgütern**
Transport assembly for transporting bulk goods
Installation de transport pour transporter des produits en vrac

(30) Priorität: 02.12.2010 AT 20032010
(43) Veröffentlichungstag der Anmeldung: 06.06.2012
(73) Patentinhaber: Innova Patent GmbH, 6960 Wolfurt (AT)
(72) Erfinder: Trieb, Herbert, 6911 Lochau (AT)
(74) Vertreter: Beer & Partner Patentanwälte KG

(56) Entgegenhaltungen:
- EP-A1- 0 949 163
- EP-A2- 2 030 919
- DE-C1- 3 504 995
- GB-A- 291 917

## Beschreibung

Die gegenständliche Erfindung betrifft eine Förderanlage zum Transport von Schüttgütern mit drei Paaren von jeweils angenähert vertikal übereinander befindlichen Tragseilen und mit einem in sich geschlossenen Förderband, welches längs der Tragseile von einer Ladestation zu einer Entladestation bewegbar und in den Endstationen über Umlenktrommeln geführt ist, wobei am Förderband voneinander im Abstand befindliche und quer zu dessen Längserstreckung ausgerichtete Tragbalken befestigt sind, an deren Enden Laufrollen gelagert sind, welche längs der mittleren und der unteren Tragseile abrollen, sowie mit in Längsrichtung der Förderanlage voneinander im Abstand befindlichen Tragrahmen, mittels welcher die Tragseile miteinander verbunden sind, wobei die Tragrahmen durch mindestens zwei zumindest angenähert vertikal ausgerichtete Tragstreben und mindestens zwei zumindest angenähert horizontal ausgerichtete Verbindungsstreben gebildet sind und weiters die oberen Enden der Tragstreben mit jeweils einem der beiden oberen Tragseile sowie die Verbindungsstreben mittels Klemmeinrichtungen mit den mittleren und den unteren Tragseilen verbunden sind.

Derartige Förderanlagen, welche z.B. aus der EP 1295817 B1 und der EP 1452466 B 1 bekannt sind, dienen zur Förderung von Schüttgütern, wie Abraummaterialien, Erzen, Kohle u.dgl. von einer Ladestation zu einer Entladestation. Diese Förderanlagen weisen Tragseile auf, längs welcher ein in sich geschlossenes Förderband bewegbar ist. Hierfür sind an der Oberseite des Förderbandes quer ausgerichtete Tragbalken befestigt, an deren beiden Enden Laufrollen gelagert sind, mittels welcher das Förderband längs zweier vertikal übereinander angeordneter Paare von Tragseilen bewegt wird. Die Laufrollen sind auf beiden Seiten mit Rollenborden ausgebildet. In den Endstationen ist das Förderband über Umlenktrommeln geführt. Oberhalb der beiden Paare von Tragseilen ist ein weiteres Paar von Tragseilen vorgesehen. Weiters sind in Längsrichtung der Förderanlage im Abstand voneinander Tragrahmen vorgesehen, welche dazu dienen, die Tragseile miteinander zu einer stabilen Einheit zu verbinden.
Dasjenige Trum des Förderbandes, welches längs der mittleren Tragseile bewegt wird, dient zur Förderung von Schüttgütern von einer Ladestation zu einer Entladestation. Das untere Trum des Förderbandes wird längs der beiden unteren Tragseile von der Entladestation zur Ladestation zurückbewegt. Die oberen Tragseile dienen zur Stabilisierung der Förderanlage.

Die Tragrahmen sind durch zwei vertikal ausgerichtete Tragstreben und durch zwei diese miteinander verbindende horizontal ausgerichtete Verbindungsstreben gebildet.

Die oberen Enden der vertikal ausgerichteten Tragstreben sind mit den beiden oberen Tragseilen fest verbunden und die zwei horizontal ausgerichteten Verbindungsstreben sind mittels vertikaler Stege mit den mittleren Tragtseilen und mit den unteren Tragseilen fest verbunden.
Beim Betrieb derartiger Förderanlagen können große seitliche Windkräfte auftreten, durch welche das Förderband seitlich so ausgelenkt werden kann, dass einer der beiden Rollenborde der Laufrollen auf die Klemmeinrichtungen, mittels welcher die Verbindungsstreben mit den Tragseilen fest verbunden sind, auflaufen können. Hierdurch treten einerseits zwischen den Rollenborden und den Klemmeinrichtungen sehr hohe Reibungskräfte auf. Andererseits werden in den Klemmeinrichtungen quer zur Bewegungsrichtung des Förderbandes deshalb starke Belastungen bewirkt, da die horizontal wirkenden Windkräfte über die vertikal ausgerichteten Stege auf die horizontal ausgerichteten Verbindungsstreben der Tragrahmen übertragen werden. Hierfür müssen die Klemmeinrichtungen entsprechend stark dimensioniert werden.

Der gegenständlichen Erfindung liegt die Aufgabe zugrunde, die Klemmeinrichtungen so auszubilden, dass von diesen auch sehr große seitliche Belastungen aufgenommen werden können. Dies wird erfindungsgemäß dadurch erzielt, dass die an den Verbindungsstreben befindlichen, jeweils den mittleren Tragseilen bzw. den unteren Tragseilen zugeordneten Klemmeinrichtungen mit den Verbindungsstreben einen spitzen Winkel einschließen und dass die Laufrollen nur an einer Seite mit einem Rollenbord ausgebildet sind.

Hierdurch werden die Klemmeinrichtungen durch seitliche Windkräfte weitaus weniger auf Biegung belastet als dies bei den bekannten Förderanlagen der Fall ist. Dadurch weiters, dass die Laufrollen nur an einer Seite mit einem Rollenbord ausgebildet sind, wird vermieden, dass einer der Rollenborde auf die Klemmeinrichtungen aufläuft, und kann weiters das Förderband in wesentlich einfacherer Weise von einer ersten Fahrbahn, z.B. Tragseilen, auf eine zweite Fahrbahn, z.B. Tragschienen, übergefahren werden, als dies bei den bisher bekannten Förderanlagen, bei welchen die Laufrollen an beiden Seiten mit Rollenborden ausgebildet sind, der Fall ist.

Vorzugsweise sind die an jeweils einer Verbindungsstrebe angeordneten Klemmeinrichtungen zueinander geneigt und sind die Laufrollen an der dem Förderband zugewandten Seite mit dem Rollenbord ausgebildet. Alternativ dazu sind die Klemmeinrichtungen voneinander weg geneigt und sind die Laufrollen an der dem Förderband abgewandten Seite mit dem Rollenbord ausgebildet.

Nach einer bevorzugten Ausführungsform weist jede Klemmeinrichtung zwei Klemmbacken auf, welche an ihren den Klemmflächen abgewandten Enden an der betreffenden Verbindungsstrebe um zumindest angenähert in Bewegungsrichtung des Förderbandes ausgerichtete Achsen verschwenkbar sind, wobei die durch die Schwenkachsen der beiden Klemmbacken definierte Ebene mit der Verbindungsstrebe einen spitzen Winkel von 5° bis 60°, vorzugsweise von etwa 20°, einschließt. Vorzugsweise schließt die Symmetrieebene zwischen den beiden Klemmbacken mit der Verbindungsstrebe einen spitzen Winkel von 85° bis 30°, vorzugsweise von etwa 70°, ein. Dabei können die beiden Klemmbacken mittels eines parallel zu der durch deren Schwenkachsen definierte Ebene ausgerichteten Zugbolzens mit dem zugeordneten Tragseil verspannbar sein. Vorzugsweise schließen die beiden Klemmbacken miteinander einen spitzen Winkel von 5° bis 50°, insbesondere von etwa 40°, ein. Vorzugsweise schließt weiters die dem Rollenbord der Laufrolle zugewandte Klemmbacke mit der Verbindungsstrebe einen spitzen Winkel von etwas weniger als 90° ein.

Gemäß einer weiters bevorzugten Ausführungsform ist die Außenfläche der Laufrollen mit einer Laufrille, weiters zum Rollenbord hin mit mindestens einer Schrägfläche und an der dem Rollenbord abgewandten Seite mit einer zylindrischen Lauffläche ausgebildet. Insbesondere sind die Laufrollen von der Seilrille weg mit einer ersten Schrägfläche, welche mit der Rollenachse einen Winkel von 10° bis 60°, vorzugsweise von etwa 35°, einschließt und weiters mit einer zweiten Schrägfläche, welche mit der Rollenachse einen Winkel von 5° bis 20°, vorzugsweise von etwa 10°, einschließt, ausgebildet. Weiters ist vorzugsweise die dem Rollenbord zugewandte Klemmbacke an ihrer dem Rollenbord zugewandten Seite mit einer dem Rollenbord zugeordneten Anlagefläche ausgebildet.

Der Gegenstand der Erfindung ist nachstehend anhand eines in der Zeichnung dargestellten Ausführungsbeispiels näher erläutert. Es zeigen:
- FIG.1: einen Teil einer erfindungsgemäßen Förderanlage für Schüttgüter, in axonometrischer Darstellung,
- FIG.2: einen Teil der in FIG. 1 dargestellten Förderanlage, in gegenüber FIG. 1 vergrößertem Maßstab,
- FIG.3: eine erste Ausführungsform einer erfindungsgemäßen Förderanlage, in Richtung der Bewegung des Förderbandes gesehen,
- FIG.3a: ein Detail der Förderanlage gemäß der FIG.3, in gegenüber FIG.3 vergrößertem Maßstab
- FIG.3b: eine zweite Ausführungsform einer erfindungsgemäßen Förderanlage, in Richtung der Bewegung des Förderbandes gesehen, und
- FIG.4: den Übergang einer erfindungsgemäßen Förderanlage zwischen Tragseilen und Tragschienen, in axonometrischer Darstellung.

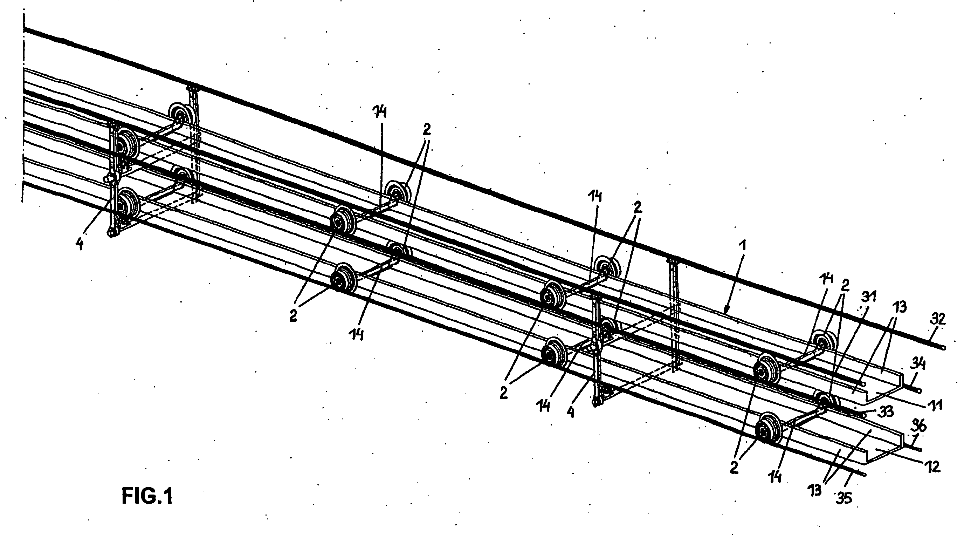

In FIG.1 ist ein Abschnitt einer Förderanlage für Schüttgüter, wie Abraummaterialien, Erze, Kohle u.dgl. dargestellt. Diese Förderanlage besteht aus einem in sich geschlossenen Förderband 1, welches zwischen einer Ladestation und einer Entladestation bewegt wird welches in den beiden Endstationen über Umlenktrommeln geführt ist. Das obere Trum 11 des Förderbandes 1 dient zur Förderung der Schüttgüter von der Ladestation zur Entladestation. In Bewegungsrichtung des Förderbandes 1 nach der Entladestation und weiters vor der Ladestation befinden sich Wendeeinrichtungen, durch welche das von der Entladestation zur Ladestation zurück bewegte untere Trum 12 des Förderbandes 1 so gewendet wird, dass sich auch bei dem zur Ladestation zurück bewegten unteren Trum 12 des Förderbandes 1 die Ladefläche an dessen Oberseite befindet, wobei das untere Trum 12 vor der Ladestation wieder zurückgewendet wird und in dieser Lage um die in der Ladestation befindliche Umlenktrommel geführt wird.

Das Förderband 1 ist an seinen beiden Seitenrändern mit von seiner Oberseite nach oben abragenden seitlichen, elastisch verformbaren Leisten, sog. Wellkanten 13, ausgebildet. Weiters ist das Förderband 1 an seiner Oberseite mit quer zu dessen Bewegungsrichtung ausgerichteten Tragbalken 14 ausgebildet, an deren freien Enden Laufrollen 2 gelagert sind. Die Förderanlage weist weiters drei Paare von übereinander angeordneten Tragseilen 31 bis 36 auf, welche miteinander mittels Tragrahmen 4 verbunden sind, wodurch die gesamte Förderanlage stabilisiert ist. Die Laufrollen 2 sind längs der beiden mittleren Tragseile 33 und 34 und längs der beiden unteren Tragseile 35 und 36 geführt.

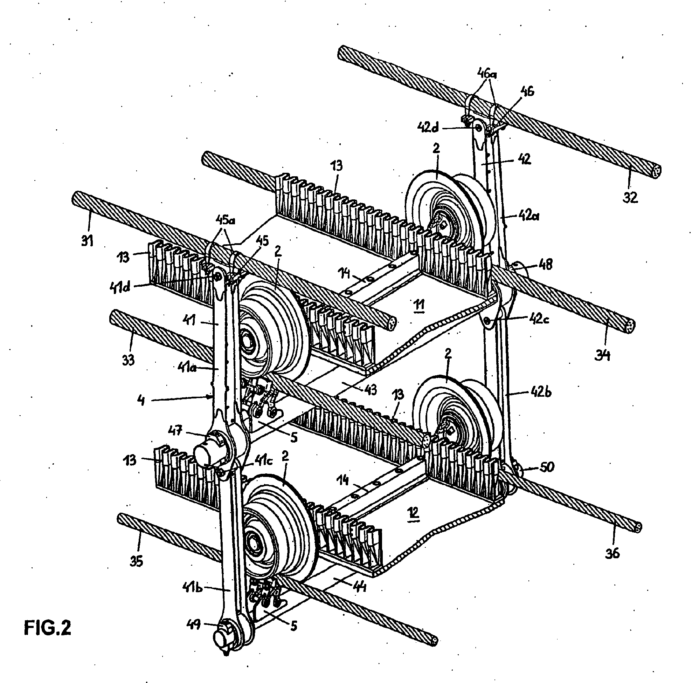

In FIG.2 sind die oberen Tragseile 31 und 32, die mittleren Tragseile 33 und 34 sowie die unteren Tragseile 35 und 36 dargestellt. Längs der mittleren Tragseile 33 und 34 wird mittels der Laufrollen 2 das obere Trum 11 des Förderbandes 1 von der Ladestation zur Entladestation bewegt. Längs der unteren Tragseile 35 und 36 wird das untere Trum 12 des Förderbandes 1 in seiner gewendeten Lage von der Entladestation zur Ladestation zurück bewegt. An den seitlichen Rändern des Förderbandes 1 ragen von diesem die angenähert vertikal nach oben gerichteten Wellkanten 13 ab, welche dehnbar sind, wodurch das Förderband 1 in den Stationen über die dort befindlichen Umlenktrommeln geführt werden kann. An der Oberseite des Förderbandes 1 befinden sich die Tragbalken 14, an deren Enden die Laufrollen 2 gelagert sind, welche längs der Tragseile 33 bis 36 abrollen.

Wie dies weiters aus FIG.2 ersichtlich ist, sind die Tragrahmen 4 durch zwei vertikale Tragstreben 41 und 42 sowie durch zwei horizontale Verbindungsstreben 43 und 44 gebildet. Dabei bestehen die Tragstreben 41 und 42 jeweils aus zwei Tragstrebenteilen 41a und 41b bzw. 42a und 42b, welche mittels jeweils eines Gelenkbolzens 41c und 42c miteinander gelenkig verbunden sind. Die beiden Gelenkbolzen 41c und 42c sind angenähert horizontal und quer zu den Tragseilen 31 bis 36 ausgerichtet. Weiters sind die oberen Enden der Tragstrebenteile 41a und 42a mittels Gelenkbolzen 41d und 42d an Tragleisten 45 und 46, welche mittels Bügel 45a und 46a mit den oberen Tragseilen 31 und 32 fest verbunden sind, gleichfalls um angenähert horizontale und quer zu den Tragseilen 31 bis 36 ausgerichtete Achsen verschwenkbar gelagert.

Zudem sind die jeweils oberen Tragstrebenteile 41a und 42a in ihrem unteren Bereich mit Naben 47 und 48 ausgebildet, in welche die als zylindrische Rohrstücke ausgebildete Verbindungsstrebe 43 einragt und in diesen verdrehbar gelagert ist. In gleicher Weise sind die unteren Tragstrebenteile 41b und 42b an ihren unteren Enden mit Naben 49 und 50 ausgebildet, in welche die als zylindrische Rohrstücke ausgebildeten unteren Verbindungsstreben 44 einragen und in diesen verdrehbar gelagert sind.
Die Verbindungsstreben 43 und 44 sind an ihren seitlichen Enden mit Klemmen 5 ausgebildet, mittels welcher sie mit den mittleren Tragseilen 33 und 34 sowie den unteren Tragseilen 35 und 36 fest verbunden sind.

Durch die gelenkige Lagerung der einzelnen Bestandteile der Tragrahmen 4 können sich diese in ihre Lage den durch den Betrieb der Förderanlage wechselnden Belastungen anpassen, wodurch die in diesen auftretenden Spannkräfte stark vermindert werden.

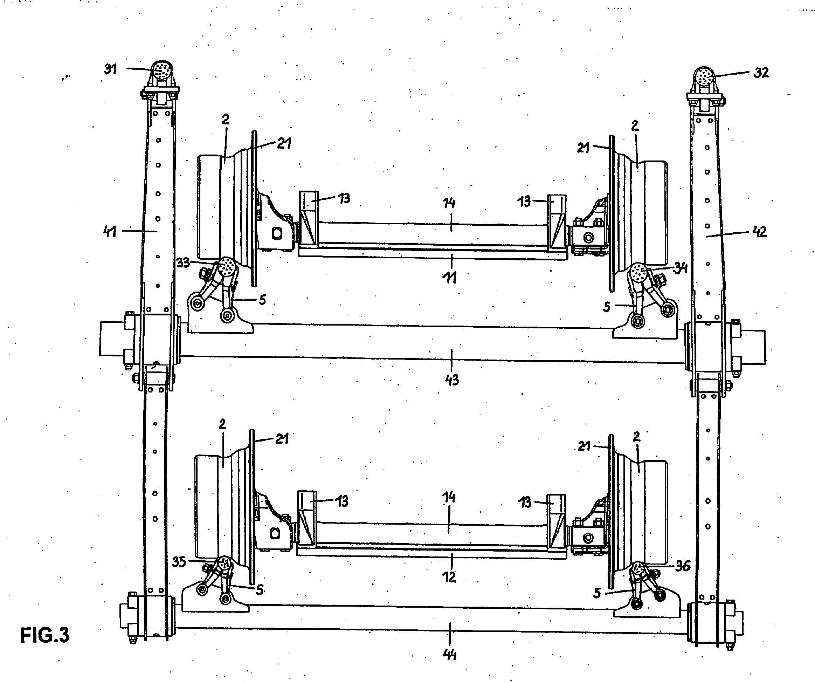

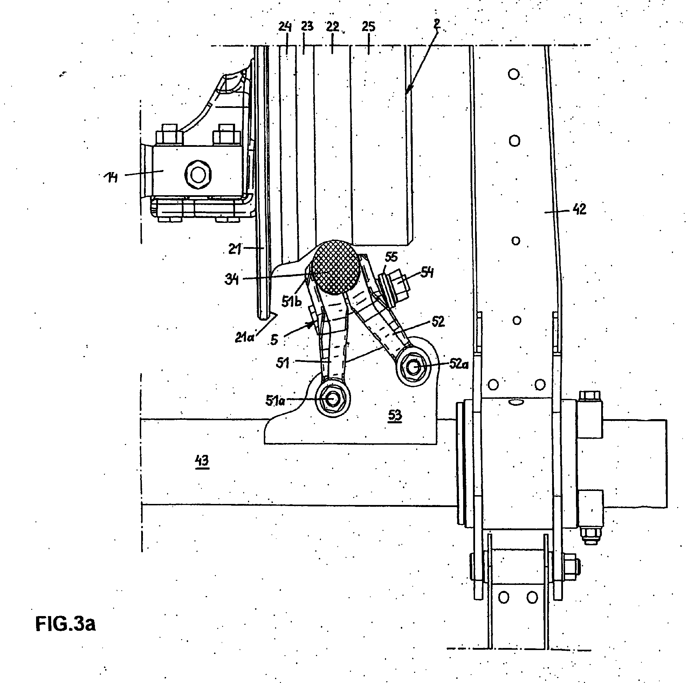

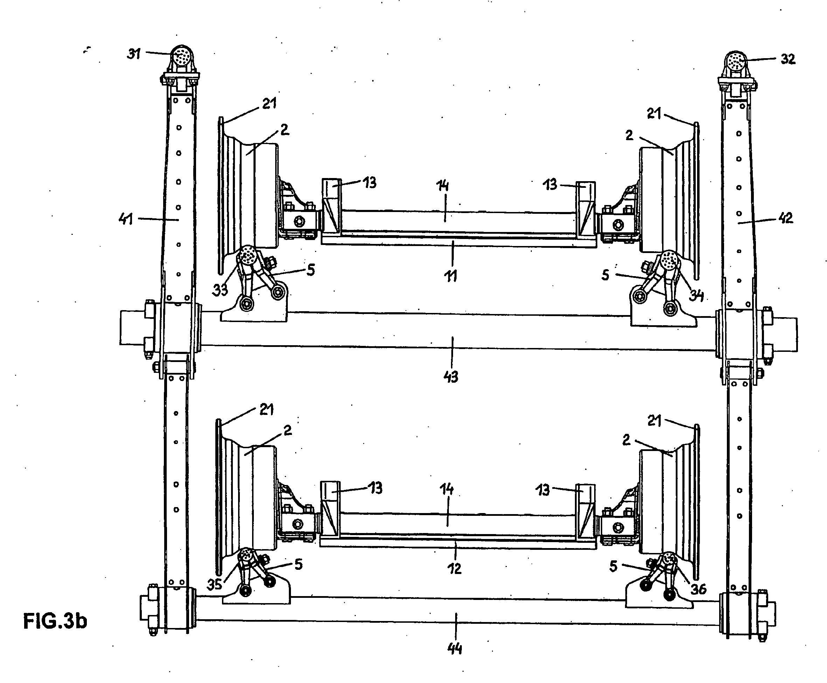

Wie dies aus FIG.3 ersichtlich ist, befinden sich die Klemmeinrichtungen 5 an den seitlichen Enden der Verbindungsstreben 43 und 44 der Halterrahmen 4, wobei sie mit der jeweiligen Verbindungsstrebe 43 und 44 einen spitzen Winkel von etwa 70° einschließen und wobei die beiden auf den Verbindungsstreben 43 bzw. 44 befindlichen beiden Klemmeinrichtungen 5 zueinander geneigt sind. Weiters ist aus FIG.3 ersichtlich, dass die Laufrollen 2 nur an der den Trumen 11 bzw. 12 des Förderbandes 1 zugewandten Seite mit Rollenborden 21 ausgebildet sind. Da somit die Laufrollen 2 nur an ihrer den Trumen 11 bzw. 12 des Förderbandes 1 zugewandten Seiten mit Rollenborden 21 ausgebildet sind, können die Klemmeinrichtungen 5 gegenüber den Verbindungsstreben 43 bzw. 44 bzw. gegenüber den Achsen der Laufrollen 2 geneigt sein, ohne dass die Gefahr besteht, dass die Laufrollen 2 mit den Klemmeinrichtungen 5 kollidieren.

Wie dies aus FIG.3a ersichtlich ist, weisen die Klemmeinrichtungen 5 zwei Klemmbacken 51 und 52 auf, welche auf einem an der Verbindungsstrebe 43 vorgesehenen Tragstück 53 um Achsen 51a und 52a verschwenkbar gelagert sind und welche mittels eines Schraubbolzens 54 unter Zwischenlage einer Druckfeder 55 mit dem jeweils zugeordneten Tragseil, in FIG.3a dem Tragseil 34, verspannbar sind.
Dabei schließt die Klemmbacke 51 mit der Verbindungsstrebe 43 einen Winkel von etwas weniger als 90° ein, schließt die Klemmbacke 52 mit der Verbindungsstrebe 43 einen Winkel von etwa 50° ein, schließen die beiden Klemmbacken 51 und 52 miteinander etwa einen Winkel von 40° ein und schließt die Symmetrieebene zwischen den beiden Klemmbacken 51 und 52 mit der Verbindungsstrebe 43 einen Winkel von etwa 70° ein.

Wie dies aus FIG.3a weiters ersichtlich ist, sind die Laufrollen 2 in ihrem mittleren Bereich mit einer Laufrille 22 ausgebildet, längs welcher sie im normalen Betrieb der Förderanlage längs der zugeordneten Tragseile ablaufen. Zwischen der Laufrolle 22 und dem Rollenbord 21 befindet sich eine Schrägfläche 23, welche mit der Achse der Laufrolle 2 einen Winkel von etwa 35° einschließt. Die Schrägfläche 23 kommt dann an das Tragseil 34 zur Anlage, wenn das Trum 12 des Förderbandes 1 insbesondere aufgrund von Windkräften seitlich verschoben wird. Die hierdurch auf die Klemmeinrichtung 5 ausgeübten horizontalen Kräfte werden hierbei insbesondere durch die Klemmbacke 52 auf die Verbindungsstrebe 43 übertragen.

Auf die Schrägfläche 23 folgt in Richtung zum Rollenbord 21 hin eine weitere Schrägfläche 24, welche mit der Achse der Laufrolle 2 einen Winkel von etwa 10° einschließt. Sobald die Schrägfläche 24 an das Tragseil 34 zur Anlage kommt, kann deshalb keine weitere Querverstellung des Trumes 12 auf das Tragseil 34 hin erfolgen, da die Seitenwand 21a des Rollenbordes 21 an die Klemmbacke 51 zur Anlage kommt. An dieser Stelle ist die Klemmbacke 51 mit einer der Seitenwand 21a entsprechend abgeflachten Anlagefläche 51b ausgebildet.

An der dem Rollenbord 21 abgewandten Seite befindet sich auf der Laufrolle 2 neben der Laufrille 22 eine zylindrische Lauffläche 25, mit welcher die Laufrolle 2 dann auf dem Seiltrum 34 abläuft, sobald das Trum 12 des Förderbandes 1 in der entgegengesetzten Richtung horizontal verstellt worden ist, wobei dann der Rollenbord 21 der auf der anderen Seite befindlichen Laufrolle 2 an die auf der anderen Seite der Verbindungsstrebe 43 befindlichen Klemmeinrichtung 5 zur Anlage kommt. Hierbei ist die axiale Länge der zylindrischen Lauffläche 25 ist etwas größer als der Abstand der Seitenwand 21a von der anliegenden Seitenkante der Laufrille 22.

Sobald die Laufrollen 2 auf eine der Schrägflächen 23 gelangen, wird die Förderanlage abgeschaltet. Dessen ungeachtet kann jedoch der Fall eintreten, dass aufgrund von sehr großen seitlichen Windkräften die Trume 11 bzw. 12 des Förderbandes 1 gegenüber den Klemmeinrichtungen 5 weiter verstellt werden.

In FIG.3b, welche der FIG.3 entspricht, ist eine zweite Ausführungsform hinsichtlich der Schrägstellung der beiden Klemmeinrichtungen 5 sowie der Lage der Rollenborde 21 dargestellt. Dabei sind die auf den beiden horizontalen Verbindungsstreben 43 und 44 befindlichen Klemmeinrichtungen 5 nicht zueinander sondern vielmehr auseinander geneigt und sind die Laufrollen 2 an ihrer dem Förderband 1 abgewandten Seite mit Rollenborden 21 ausgebildet. Diese konstruktive Gestaltung ergibt sich dann, wenn die auf den Verbindungsstreben 43 und 44 befindlichen Klemmeinrichtungen 5 und die diesen zugeordneten Laufrollen 2 gemäß FIG.3 gegeneinander vertauscht werden.
Die Wirkungsweise und Vorteile der beiden dargestellten Ausführungsformen sind identisch.

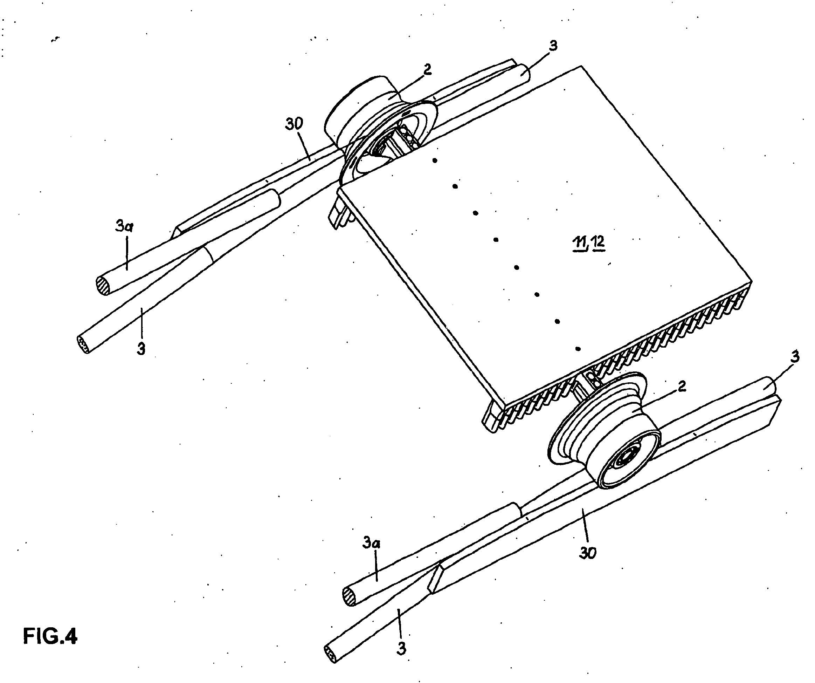

Aus FIG.4 ist weiters die Ausbildung des Überganges von Tragseilen 3 auf Führungsschienen 3a ersichtlich. Dabei schließen an zwei Tragseile 3 zwei Überfahrrampen 30 an, welche in zylindrische Führungsschienen 3a übergehen. Die Tragseile 3 sind von den Überfahrrampen 30 schräg nach unten weggeführt. Da die Laufrollen 2 nur mit jeweils einem einzigen Rollenbord 21 ausgebildet sind, können sich diese ungehindert von den Tragseilen 3 auf die Führungsschienen 3a bewegen.

## Patentansprüche

1. Förderanlage zum Transport von Schüttgütern mit drei Paaren von jeweils angenähert vertikal übereinander befindlichen Tragseilen (31 bis 36) und mit einem in sich geschlossenen Förderband (1), welches längs der Tragseile (31 bis 36) bewegbar und an den Enden der Anlage über Umlenktrommeln geführt ist, wobei am Förderband (1) voneinander im Abstand befindliche und quer zu dessen Längserstreckung ausgerichtete Tragbalken (14) befestigt sind, an deren Enden Laufrollen (2) gelagert sind, welche längs der mittleren und der unteren Tragseile (33 bis 36) abrollen, sowie mit in Längsrichtung der Förderanlage voneinander im Abstand befindlichen Tragrahmen (4), mittels welcher die Tragseile (31 bis 36) miteinander verbunden sind, wobei die Tragrahmen (4) durch zwei zumindest angenähert vertikal ausgerichtete Tragstreben (41, 42) und zwei zumindest angenähert horizontal ausgerichtete Verbindungsstreben gebildet sind und weiters die oberen Enden der Tragstreben (41, 42) jeweils mit einem der beiden oberen Tragseile (31, 32) sowie die Verbindungsstreben (43, 44) mittels an diesen befindlichen Klemmeinrichtungen (5) mit den mittleren und mit den unteren Tragseilen (33 bis 36) verbunden sind, **dadurch gekennzeichnet, dass** die an den Verbindungsstreben (43, 44) befindlichen, jeweils den mittleren Tragseilen (33, 34) bzw. den unteren Tragseilen (35, 36) zugeordneten Klemmeinrichtungen (5) mit den Verbindungsstreben (43, 44) einen spitzen Winkel einschließen und dass die Laufrollen (2) nur an einer Seite mit einem Rollenbord (21) ausgebildet sind.

2. Förderanlage nach Patentanspruch 1, **dadurch gekennzeichnet, dass** die an jeweils einer Verbindungsstrebe (43, 44) angeordneten Klemmeinrichtungen (5) zueinander geneigt sind und dass die Laufrollen (2) an der dem Förderband (1) zugewandten Seite mit einem Rollenbord (21) ausgebildet sind.

3. Förderanlage nach Patentanspruch 1, **dadurch gekennzeichnet, dass** die an jeweils einer Verbindungsstrebe (43, 44) angeordneten Klemmeinrichtungen (5) voneinander weg geneigt sind und dass die Laufrollen (2) an der dem Förderband (1) abgewandten Seite mit einem Rollenbord (21) ausgebildet sind.

4. Förderanlage nach einem der Patentansprüche 1 bis 3, **dadurch gekennzeichnet, dass** jede Klemmeinrichtung (5) zwei Klemmbacken (51, 52) aufweist, welche an ihren den Klemmflächen abgewandten Enden an der betreffenden Verbindungsstrebe (43, 44) um zumindest angenähert in Bewegungsrichtung des Förderbandes ausgerichtete Achsen (51a, 52a) verschwenkbar sind, wobei die durch die Schwenkachsen der beiden Klemmbacken (51, 52) definierte Ebene mit der Verbindungsstrebe einen spitzen Winkel von 5° bis 60°, vorzugsweise von etwa 20°, einschließt.

5. Förderanlage nach Patentanspruch 4, **dadurch gekennzeichnet, dass** die Symmetrieebene zwischen den beiden Klemmbacken (51, 52) mit der Verbindungsstrebe (43) einen spitzen Winkel von 85° bis 30°, vorzugsweise von etwa 70°, einschließt.

6. Förderanlage nach einem der Patentansprüche 4 und 5, **dadurch gekennzeichnet, dass** die beiden Klemmbacken (51, 52) mittels eines parallel zu der durch deren Schwenkachsen definierte Ebene ausgerichteten Zugbolzens (54) mit dem zugeordneten Tragseil (34) verspannbar sind.

7. Förderanlage nach einem der Patentansprüche 4 bis 6, **dadurch gekennzeichnet, dass** die beiden Klemmbacken (51, 52) miteinander einen spitzen Winkel von 5° bis 45°, insbesondere von etwa 40°, einschließen.

8. Förderanlage nach einem der Patentansprüche 4 bis 7, **dadurch gekennzeichnet, dass** die dem Rollenbord (21) der Laufrolle (2) zugewandte Klemmbacke (51) mit der Verbindungsstrebe (43) einen spitzen Winkel von etwas weniger als 90° einschließt.

9. Förderanlage nach einem der Patentansprüche 1 bis 8, **dadurch gekennzeichnet, dass** die Außenfläche der Laufrollen (2) mit einer Laufrille (22), weiters zum Rollenbord (21) hin mit mindestens einer Schrägfläche (23) und an der dem Rollenbord (21) abgewandten Seite mit einer zylindrischen Lauffläche (25) ausgebildet ist.

10. Förderanlage nach Patentanspruch 9, **dadurch gekennzeichnet, dass** die Laufrollen von der Seilrille (22) weg mit einer ersten Schrägfläche (23), welche mit der Rollenachse einen Winkel von 10° bis 60°, vorzugsweise von etwa 35°, einschließt und weiters mit einer zweiten Schrägfläche (24), welche mit der Rollenachse einen Winkel von 5° bis 20°, vorzugsweise von etwa 10°, einschließt, ausgebildet ist.

11. Förderanlage nach einem der Patentansprüche 8 bis 10, **dadurch gekennzeichnet, dass** die dem Rollenbord (21) zugewandte Klemmbacke (51) an ihrer dem Rollenbord (21) zugewandten Seite mit einer dem Rollenbord zugeordneten Anlagefläche (51b) ausgebildet ist.

## Claims

1. A conveying installation for transporting bulk materials, having three pairs of supporting cables (31 to 36) located in each case approximately vertically one above the other and having an endless conveyor belt (1), which is movable along the supporting cables (31 to 36) and at the ends of the installation is guided over return drums, mutually spaced supporting beams (14) oriented transversely of the lengthwise extension of the conveyor belt (1) being fastened to said conveyor belt, rollers (2) which run along the middle and lower supporting cables (33 to 36) being mounted at the ends of said supporting beams (14), and also having supporting frames (4) spaced from one another in the lengthwise direction of the conveying installation, said supporting frames (4) connecting together the supporting cables (31 to 36) and being formed by two at least approximately vertically oriented supporting struts (41, 42) and two at least approximately horizontally oriented connecting struts, and the upper ends of the supporting struts (41, 42) additionally being connected with in each case one of the two upper supporting cables (31, 32) and the connecting struts (43, 44) being connected, by means of clamping means (5) located thereon, with the middle and lower supporting cables (33 to 36), **characterised in that** the clamping means (5) located on the connecting struts (43, 44) and associated respectively with the middle supporting cables (33, 34) and the lower supporting cables (35, 36) form an acute angle with the connecting struts (43, 44) and **in that** the rollers (2) are provided on just one side with a roller flange (21).

2. A conveying installation according to claim 1, **characterised in that** the clamping means (5) arranged in each case on a connecting strut (43, 44) are inclined towards one another and **in that** the rollers (2) are provided on the side facing the conveyor belt (1) with a roller flange (21).

3. A conveying installation according to claim 1, **characterised in that** the clamping means (5) arranged in each case on a connecting strut (43, 44) are inclined away from one another and **in that** the rollers (2) are provided on the side remote from the conveyor belt (1) with a roller flange (21).

4. A conveying installation according to one of claims 1 to 3, **characterised in that** each clamping means (5) comprises two clamping jaws (51, 52), which at their ends remote from the clamping surfaces are swivellable on the relevant connecting strut (43, 44) about axes (51a, 52a) oriented at least approximately in the direction of movement of the conveyor belt, the plane defined by the swivel axes of the two clamping jaws (51, 52) forming an acute angle of 5° to 60°, preferably of approximately 20°, with the connecting strut.

5. A conveying installation according to claim 4, **characterised in that** the plane of symmetry between the two clamping jaws (51, 52) forms an acute angle of 85° to 30°, preferably of approximately 70°, with the connecting strut (43).

6. A conveying installation according to one of claims 4 and 5, **characterised in that** the two clamping jaws (51, 52) can be clamped together with the associated supporting cable (34) by means of a tension bolt (54) oriented parallel to the plane defined by the swivel axes of said jaws.

7. A conveying installation according to one of claims 4 to 6, **characterised in that** the two clamping jaws (51, 52) form an acute angle with one another of 5° to 45°, in particular of approximately 40°.

8. A conveying installation according to one of claims 4 to 7, **characterised in that** the clamping jaw (51) facing the roller flange (21) of the roller (2) forms an acute angle with the connecting strut (43) of somewhat less than 90°.

9. A conveying installation according to one of claims 1 to 8, **characterised in that** the outer surface of the rollers (2) is provided with a roller groove (22) and additionally with at least one inclined face (23) towards the roller groove (21) and with a cylindrical running surface (25) on the side remote from the roller flange (21).

10. A conveying installation according to claim 9, **characterised in that** the rollers are formed, in the direction away from the cable groove (22), with a first inclined face (23), which forms an angle of 10° to 60°, preferably of approximately 35°, with the roller axis and additionally with a second inclined face (24), which forms an ancle of 5° to 20°, preferably of approximately 1C°, with the roller axis.

11. A conveying installation according to one of claims 8 to 10, **characterised in that** the clamping jaw (51) facing the roller flange (21) is provided on its side facing the roller flange (21) with a contact surface (51b) associated with the roller flange.

## Revendications

1. Installation de transport pour transporter des produits en vrac, avec trois paires de câbles porteurs (31 à 36) qui sont disposés les uns au-dessus des autres, à peu près à la verticale, et avec un convoyeur à bande sans fin (1) qui est apte à être déplacé le long des câbles porteurs (31 à 36) et qui passe, aux extrémités de l'installation, sur des tambours de renvoi, étant précisé qu'il est prévu, fixées au convoyeur à bande (1), des barres de support (14) qui sont espacées les unes des autres et disposées transversalement par rapport au sens longitudinal dudit convoyeur à bande et aux extrémités desquelles sont disposés des galets de roulement (2) qui roulent le long des câbles porteurs centraux et inférieurs (33 à 36), et avec des châssis de support (4) qui sont espacés les uns des autres dans le sens longitudinal de l'installation de transport et grâce auxquels les câbles porteurs (31 à 36) sont reliés entre eux, étant précisé que les châssis porteurs (4) sont formés par deux montants (41, 42) au moins approximativement verticaux et deux traverses de liaison au moins approximativement horizontales et que les extrémités supérieures des montants (41, 42) sont reliées chacune à l'un des deux câbles porteurs supérieurs (31, 32) tandis que les traverses de liaison (43, 44) sont reliées à l'aide de dispositifs de serrage (5) prévus sur elles aux câbles porteurs centraux et inférieurs (33 à 36),
**caractérisée en ce que** les dispositifs de serrage (5) situés sur les traverses de liaison (43, 44) et associés respectivement aux câbles porteurs centraux (33, 34) et aux câbles porteurs inférieurs (35, 36) définissent avec lesdites traverses de liaison (43, 44) un angle aigu, et **en ce que** les galets de roulement (2) sont pourvus, sur un côté seulement, d'un bord de galet (21).

2. Installation de transport selon la revendication 1, **caractérisée en ce que** les dispositifs de serrage (5) disposés sur chacune des traverses de liaison (43, 44) sont inclinés l'un vers l'autre et **en ce que** les galets de roulement (2) sont pourvus d'un bord de galet (21) sur leur côté tourné vers le convoyeur à bande (1).

3. Installation de transport selon la revendication 1, **caractérisée en ce que** les dispositifs de serrage (5) disposés sur chacune des traverses de liaison (43, 44) sont inclinés à l'opposé l'un de l'autre et **en ce que** les galets de roulement (2) sont pourvus d'un bord de galet (21) sur leur côté opposé au convoyeur à bande (1).

4. Installation de transport selon l'une des revendications 1 à 3, **caractérisée en ce que** chaque dispositif de serrage (5) comporte deux mâchoires de serrage (51, 52) qui, à leurs extrémités opposées aux surfaces de serrage, sont aptes à pivoter au niveau de la traverse de liaison concernée (43, 44) sur des axes (51a, 52a) orientés au moins approximativement dans le sens de déplacement du convoyeur à bande, étant précisé que le plan défini par les axes de pivotement des deux mâchoires de serrage (51, 52) définit avec la traverse de liaison un angle aigu de 5° à 60°, de préférence d'environ 20°.

5. Installation de transport selon la revendication 4, **caractérisée en ce que** le plan de symétrie entre les deux mâchoires de serrage (51, 52) définit avec la traverse de liaison (43) un angle aigu de 85° à 30°, de préférence d'environ 70°.

6. Installation de transport selon l'une des revendications 4 et 5, **caractérisée en ce que** les deux mâchoires de serrage (51, 52) sont aptes à être serrées sur le câble porteur associé (34) à l'aide d'un boulon de traction (54) parallèle au plan défini par les axes de pivotement desdites mâchoires.

7. Installation de transport selon l'une des revendications 4 à 6, **caractérisée en ce que** les deux mâchoires de serrage (51, 52) définissent conjointement un angle aigu de 5° à 45°, en particulier d'environ 40°.

8. Installation de transport selon l'une des revendications 4 à 7, **caractérisée en ce que** la mâchoire de serrage (51) tournée vers le bord (21) du galet de roulement (2) définit avec la traverse de liaison (43) un angle aigu d'un peu moins de 90°.

9. Installation de transport selon l'une des revendications 1 à 8, **caractérisée en ce que** la surface extérieure des galets de roulement (2) est pourvue d'une gorge (22) et, en direction du bord de galet (21), d'au moins une surface inclinée (23) et, sur le côté opposé au bord de galet (21), d'une surface de roulement cylindrique (25).

10. Installation de transport selon la revendication 9, **caractérisée en ce que** les galets de roulement, à l'opposé de la gorge (22), sont pourvus d'une première surface inclinée (23) qui définit avec l'axe de galet un angle de 10° à à 60°, de préférence d'environ 35°, et d'une seconde surface inclinée (24) qui définit avec l'axe de galet un angle de 5° à 20°, de préférence d'environ 10°.

11. Installation de transport selon l'une des revendications 8 à 10, **caractérisée en ce que** la mâchoire de serrage (51) tournée vers le bord de galet (21) est pourvue, sur son côté tourné vers le bord de galet (21), d'une surface d'application (51b) tournée vers le bord de galet.
